Europäisches Patentamt

European Patent Office

Office européen des brevets

Veröffentlichungsnummer: **0 299 100**

**A1**

# EUROPÄISCHE PATENTANMELDUNG

21 Anmeldenummer: 87110186.1

22 Anmeldetag: 15.07.87

51 Int. Cl.4 **H02K 1/28** , **H02K 15/02**

43 Veröffentlichungstag der Anmeldung:
**18.01.89 Patentblatt 89/03**

84 Benannte Vertragsstaaten:
**CH FR GB IT LI NL SE**

71 Anmelder: **ROBERT KRUPS STIFTUNG & CO.
KG.
Heresbachstrasse 29
D-5650 Solingen 19(DE)**

72 Erfinder: **Bremicker, Gerd
Schellenbeckerstrasse 69
D-5600 Wuppertal 2(DE)**

74 Vertreter: **Buse, Karl Georg, Dipl.-Phys. et al
Patentanwälte Dipl.-Phys. Buse Dipl.-Phys.
Mentzel Dipl.-Ing. Ludewig Unterdörnen 114
Postfach 20 02 10
D-5600 Wuppertal 2(DE)**

54 Verfahren zum Herstellen von Ankern für Elektromotore und nach diesem Verfahren hergestellte Anker.

57 Es handelt sich um ein Verfahren zum Herstellen von Ankern für Elektromotore mit einer Motorwelle und wenigstens einem auf der Umfangsfläche der Motorwelle in deren Längsrichtung verlaufenden Vorsprung und einem an der Motorwelle zu befestigenden Ankerpaket, bestehend aus einer Vielzahl von nebeneinander angeordneten Ankerblechen mit jeweils einem mittleren Durchbruch. Dabei erhält jeder Durchbruch im Bereich seines Begrenzungsrandes eine dem Vorsprung der Motorwelle angepaßte Aussparung Die Ankerbleche werden zu einem Ankerpaket zusammengesetzt. Danach wird die Motorwelle in das Ankerpaket eingeschoben und positioniert. Zur Herstellung einer Verbindung zwischen der Motorwelle und dem Ankerpaket erfolgt eine relative Winkelbewegung der beiden Teile zueinander von vorzugsweise 20°. Die Aussparung in dem Begrenzungsrand des mittleren Durchbruches jedes Ankerbleches ist in ihren Abmessungen etwas größer gehalten als der Durchmesser der mit wenigstens einem Vorsprung versehenen Motorwelle.

FIG.1

## Verfahren zum Herstellen von Ankern für Elektromotore und nach diesem Verfahren hergestellte Anker

Die Erfindung bezieht sich auf ein Verfahren zum Herstellen von Ankern für Elektromotore, bei der die Motorwelle auf ihrer Umfangsfläche im mittleren Bereich mit wenigstens einem in Längsrichtung verlaufenden Vorsprung und anschließend mit einem Ankerpaket versehen wird, welches aus einer Vielzahl von nebeneinander angeordneten Ankerblechen mit jeweils einem mittleren Durchbruch besteht.

Bei einem bekannten Verfahren zum Herstellen von Ankern für Elektromotore wird die Motorwelle im Bereich ihrer Umfangsfläche - und zwar in Längsrichtung verlaufend - mit mehreren Vorsprüngen versehen. Diese können beispielsweise dadurch erzeugt werden daß man Einkerbungen vornimmt, wobei das neben den Kerben liegende Material nach außen gedrängt wird und die Vorsprünge bildet. Eine derartige mit Vorsprüngen versehene Welle wird dann in die glatte Bohrung der Ankerbleche mit hohem Druck eingedrückt. Bei diesem Arbeitsgang werden die Vorsprünge durch die glatten Begrenzungswandungen der Ankerbleche nach und nach abgeschabt, so daß die letzten Bohrungen der Ankerbleche und auch der Isolierstern kaum noch Haftung auf der Motorwelle haben. Dadurch ergibt sich der Nachteil, daß die Ankernuten der Ankerbleche nicht mehr miteinander fluchten, und es ergeben sich ferner Schwierigkeiten bei der Ankernutisolierung. Ferner stellt sich bei diesem bisherigen Verfahren zum Herstellen von Ankern für Elektromotore der Nachteil ein, daß durch die ständige Abstimmung zwischen der Höhe der Vorsprünge und der Ankerblechbohrung und der Materialhärte der Bleche die Lagerstellen auf der Motorwelle teilweise so geschädigt werden, daß es beim bestimmungsgemäßen Gebrauch solcher Anker Lagerfresser gibt.

Durch die DE-OS 2 062 419 ist ein Rotor für eine elektrische Maschine, insbesondere für einen Andrehmotor von Brennkraftmaschinen in Kraftfahrzeugen bekanntgeworden mit einer ein Steilgewinde tragenden Welle und einem auf der Welle sitzenden, die Rotorwicklung tragenden Blechpaket, dessen Innenbohrung zur Aufnahme der Rotorwelle geringfügig größer als der Außendurchmesser des Steilgewindes ist. Bei diesen bekannten Rotoren sitzt das Blechpaket nicht in der Wellenmitte sondern näher an dem einen Wellenende. Der zur Aufnahme des Blechpaketes bestimmte Abschnitt der Rotorwelle ist mit einer Rändelung versehen, die in die Bohrung des vorgefertigten Blechpaketes eingepreßt wird. Beim Einpressen der Welle muß dabei darauf geachtet werden, daß einmal das bereits fertiggestellte Steilgewinde nicht beschädigt oder verformt wird und zum anderen die Rotorwelle beim Aufbringen des Einpreßdruckes nicht ausknickt. Daher wird bei dem Herstellungsverfahren derartiger Rotoren die Rotorwelle von dem das Steilgewinde tragenden Wellenende her in die Bohrung des Blechpakets eingeführt und mit ihrem Rändelabschnitt durch an dem anderen Wellenende angesetzte Druckwerkzeuge in die Bohrung eingepreßt. Bei derartigen Rotoren ist es auch bekannt, daß der das Blechpaket aufnehmende Wellenabschnitt ein entlang seines Umfangs aufgeworfenes Profil trägt, das auch dem zuvor glatten Wellenabschnitt mit gleichem oder kleinerem Durchmesser als der Durchmesser, der zur Aufnahme des Steilgewindes bestimmten Wellenzone herausgedrückt ist und dessen Außendurchmesser größer als der Außendurchmesser des Steilgewindes ist.

Durch die DD-PS 117 304 ist eine Läuferwelle für elektrische Maschinen bekanntgeworden, auf der das Läuferblechpaket ohne Verwendung einer Paßfeder befestigt ist. Dabei ist die Läuferwelle mit Verankerungsflächen und mit Führungsflächen versehen, wobei die Verankerungsflächen und die Führungsflächen in Umfangsrichtung abwechselnd aufeinanderfolgen. Ferner sind die Verankerungsflächen durch in Umfangsrichtung aufeinanderfolgende Vertiefungen und Erhebungen gebildet, während die Führungsflächen Teile von Zylinderflächen sind. Durch diese Ausgestaltung soll eine Verbindung zwischen Welle und Läuferblechpaket geschaffen werden, bei der es vermieden wird, daß sich die Welle durch hohen erforderlichen Einpreßdruck krümmt und sich die Rände-lung exzentrisch in die einzelnen Läuferblechpakete eingräbt. Bei allen bisher bekannten Ausführungsformen ist der mittlere Durchbruch des Ankerbleches kreisrund gehalten, und es erfolgt jeweils ein Aufpressen auf die mit einer Rändelung oder mit Vorsprüngen versehene Läuferwelle. Das Aufbringen des Blechpaketes auf die Rotorwelle geschieht derart, daß die Welle in die zentrische Innenbohrung des Blechpaketes eingeführt und in die Bohrung eingepreßt wird. Dabei verbeißen sich die Oberkanten des Profils in der Innenwand des Blechpaketes und garantieren einen unverdrehbaren Sitz des Blechpaketes auf der Rotorwelle. Bei diesem Arbeitsgang werden die Vorsprünge durch die glatten Begrenzungswandungen der Ankerbleche nach und nach abgeschabt mit dem Erfolg, daß die letzten Bohrungen der Ankerbleche und auch der Isolierstern kaum noch Haftung auf der Motorwelle haben.

Der vorliegenden Erfindung liegt die Aufgabe zugrunde, ein Verfahren zum Herstellen von Ankern für Elektromotore der eingangs näher gekennzeichneten Art weiter zu verbessern und dabei insbesondere die angeführten Nachteile der bekannten Herstellungsverfahren für Anker zu beseitigen Insbesondere soll erreicht werden, daß der Ausschuß bei der Herstellung von Ankern für Elektromotore reduziert wird. Die Paketiermethoden sollen verbessert und damit die Kosten gesenkt werden, und vor allem soll das erfindungsgemäße Verfahren die Voraussetzungen für eine automatische Fertigung der Anker verbessern.

Erfindungsgemäß wird dies dadurch erreicht, daß jedes Ankerblech einen Durchbruch erhält. der im Bereich seines Lagerrandes mit einer dem Vorsprung angepaßten Aussparung versehen wird und danach die Ankerbleche zu einem Ankerpaket zusammengesetzt werden, worauf die Motorwelle in das Ankerpaket eingeschoben und positioniert wird und danach zur Herstellung einer Verbindung zwischen Motorwelle und Ankerpaket eine relative Winkelbewegung der beiden Teile zueinander erfolgt.

Das erfindungsgemäße Verfahren zum Herstellen von Ankern für Elektromotore hat gegenüber dem Bekannten erhebliche Vorteile. Zwar wird nach wie vor die Motorwelle auf ihrer Umfangsfläche in Längsrichtung liegend mit wenigstens einem Vorsprung versehen, jedoch wird dem Ankerblech nicht - wie bisher - eine mittlere glatte, also im Durchmesser kreisförmige Bohrung zugeordnet sondern in den Begrenzungsrändern des Durchbruches wird wenigstens eine Aussparung vorgesehen. Bei dieser Ausbildung kann die mit wenigstens einem Vorsprung versehene Motorwelle im Schiebesinn in das gekrammte Ankerpaket positioniert und dann in dem Ankerpaket gedreht werden. Durch das erfindungsgemäße Verfahren, insbesondere durch den letzten Verfahrensschritt. nämlich die Winkeldrehung. wird erreicht, daß sowohl das erste als auch das letzte Ankerblech gleiches Material zum Verdrängen haben. Daher wird im Gegensatz zu den nach dem alten Verfahren hergestellten Ankern dafür gesorgt, daß alle Bleche und auch der Isolierstern - wie gewollt - fest auf der Motorwelle sitzen. Durch den benutzten Schiebesitz. mit dem die Motorwelle und das Ankerpaket ineinandergeschachtelt werden. bleiben die Lagerstellen unbeschädigt. und es sind Lagerfresser damit ausgeschlossen. Durchgeführte Versuche haben ergeben. daß sich das erfindungsgemäße Verfahren insbesondere für die automatische Fertigung bei der Herstellung von Ankern für Elektromotore eignet.

Vorteilhaft ist es, wenn die Winkelbewegung zwischen der Motorwelle und dem Ankerpaket etwa 20° beträgt. Dieser verhältnismäßig kleine Winkelbetrag genügt, um - wie gewollt - eine außerordentlich feste Verbindung zwischen dem Ankerpaket und der Motorwelle zu erzielen.

Zur Durchführung des erfindungsgemäßen Verfahrens wird ein Anker für Elektromotore benutzt, bei dem jedes Ankerblech des Ankerpaketes einen mittleren Durchbruch aufweist. dessen Begrenzungswand wenigstens eine Aussparung hat, wobei die Abmessungen dieses Durchbruches etwas größer gehalten sind als der Durchmesser der mit wenigstens einem Vorsprung versehenen Motorwelle. Auf diese Wiese ist ein leichtes Einschieben der Motorwelle in die zu einem Ankerpaket zusammengefaßten Ankerbleche möglich.

Bei der bevorzugten Ausführungsform der Erfindung weist die Motorwelle neben dem Vorsprung liegend und parallel dazu verlaufend eine Kerbe auf. Diese Kerbe kann dazu benutzt werden, um Material aus der vollwandigen Motorwelle herauszupressen und es zur Bildung eines Vorsprunges zu benutzen.

Dabei empfiehlt es sich, den Vorsprung der Motorwelle im Querschnitt gesehen etwa als spitzwinkliges Dreieck zu gestalten. wobei die Spitze dieses Dreiecks nach außen zeigt. Eine solche Ausbildung macht sich bei der abschließenden Drehbewegung zwischen Motorwelle und Ankerpaket durch eine feste Verbindung zwischen den beiden genannten Teilen vorteilhaft bemerkbar.

Es empfiehlt sich, die Aussparung in dem Begrenzungsrand des Durchbruches des Ankerbleches jeweils einen steilen Führungsbereich und einen etwa geradlinig verlaufenden Befestigungsbereich aufweisen zu lassen. Die Führungsbereiche der zu einem Paket zusammengesetzten Ankerbleche lassen ein leichtes Einschieben der Motorwelle in das Ankerpaket zu, während der geradlinig verlaufende Befestigungsbereich zur Herstellung der festen Verbindung zwischen dem Ankerpaket und der Motorwelle herangezogen wird und zwar dadurch. daß sich beim Drehen der beiden Teile gegeneinander die Spitzen des Vorsprunges der Motorwelle in diesen Bereich einpressen.

Bei der bevorzugten Ausführungsform der Erfindung werden vier untereinander gleichgestaltete und über die Umfangsfläche der Motorwelle verteilt angeordnete Vorsprünge benutzt, denen eine entsprechende Anzahl von angepaßten Aussparungen der Begrenzungsränder der Durchbrüche der Ankerbleche zugeordnet sind.

Aus herstellungstechnischen Gründen ist es zweckmäßig, wenn die Vorsprünge der Motorwelle dieser unmittelbar angeformt sind. d.h. Motorwelle und Vorsprung sind vorzugsweise einstückig gehalten Grundsätzlich ist es aber auch möglich, die Vorsprünge für sich herzustellen, um sie dann in einem besonderen Arbeitsgang mit der Umfangsfläche der Motorwelle zu verbinden und zwar derart, daß der aufgebrachte Vorsprung in Längsrichtung der Motorwelle verläuft. Daneben ergibt sich aber auch die Möglichkeit, die Vorsprünge auf der Umfangsfläche der Motorwelle durch Aufbringen von Material herzustellen.

Auf der Zeichnung ist die Erfindung in einem Ausführungsbeispiel dargestellt und zwar zeigen:

Fig. 1 in schaubildlicher Darstellung eine Motorwelle, auf deren Umfangsfläche ein Ankerpaket angeordnet ist, teilweise weggeschnitten.

Fig. 2 in Seitenansicht eine Motorwelle gemäß der Fig. 1 der Zeichnung.

Fig. 3 einen Schnitt durch die Motorwelle nach der Fig. 2 der Zeichnung entlang der Linie III-III im vergrößerten Maßstab.

Fig. 4 in Seitenansicht eines der Ankerbleche, aus dem das Ankerpaket gemäß der Fig. 1 der Zeichnung gebildet ist und

Fig. 5 den mittleren Bereich des Ankerbleches gemäß der Fig 4 im vergrößerten Maßstab. teilweise weggebrochen.

Es sei zunächst erwähnt, daß in den Figuren der Zeichnung nur diejenigen Teile eines Ankers eines Elektromotors dargestellt sind, die für die Erfindung von Bedeutung sind. So sind beispielsweise alle dem Anker zuzuordnenden Teile, wie Isolation. Wicklung und dergl. ebenso weggelassen wie die mit dem Anker zusammenwirkenden anderen Teile eines Elektromotors. Im übrigen können alle in den Zeichnungen nicht darge stellten Teile eine bekannte Ausbildung erhalten und in ebenfalls bekannter Weise miteinander vereinigt werden.

Der dem Ausführungsbeispiel zugrunde gelegte Anker ist generell mit 10 bezeichnet. Zu ihm gehört ein Ankerpaket 11, das aus einer Vielzahl von Ankerblechen 12 zusammengesetzt ist. wobei diese durch bekannte Verbindungsmittel zu einer Einheit zusammengefaßt werden können. Die dazu zu benutzenden Verbindungsmittel und die Verbindungsverfahren sind grundsätzlich bekannt. so daß auf die Angabe von Einzelheiten verzichtet wird.

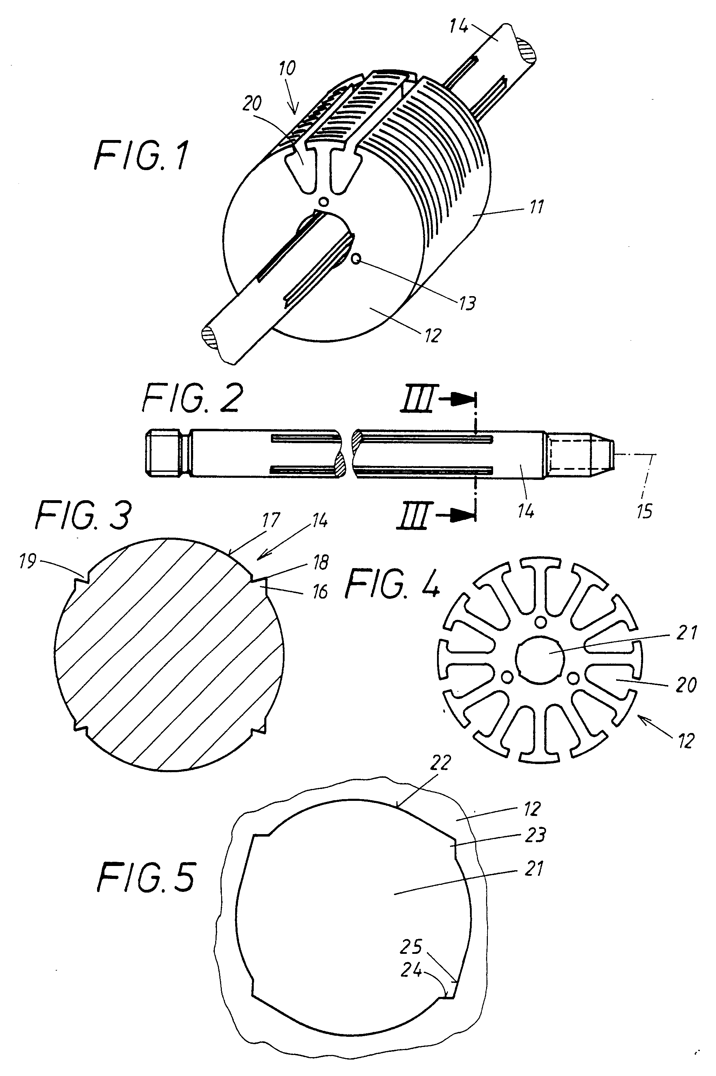

Die Motorwelle ist mit 14 bezeichnet. Sie hat die aus der Fig. 2 der Zeichnung ersichtliche Ausführungsform. Dabei ist ihre Längsmittellinie mit 15 angegeben. Parallel zur Längsmittellinie 15 sind auf der Umfangsfläche der Motorwelle 14 insgesamt vier Vorsprünge 16 angedeutet. die im mittleren Bereich der Umfangsfläche 17 der Motorwelle 14 liegen. wie dies die Fig. 2 deutlich erkennen läßt. Im gewählten Ausführungsbeispiel ist jeder der Vorsprünge 16 im Querschnitt gesehen als spitzwinkliges Dreieck ausgebildet. wobei die Spitze dieses Dreiecks mit 18 bezeichnet ist und nach außen weist. Neben dem Vorsprung 16 ist im gewählten Ausführungsbeispiel jeweils eine Kerbe 19 angebracht. Durch Bildung einer solchen Kerbe 19 in der Umfangsfläche 17 der Motorwelle 14 kann der Vorsprung 16 gebildet werden.

Nach dem Ausführungsbeispiel ist der Motorwelle 14 ein Ankerpaket 11 zugeordnet. das aus einer Vielzahl von Ankerblechen 12 zusammengesetzt ist. Eines dieser Ankerbleche ist in der Fig. 4 der Zeichnung wiedergegeben. Daraus ergibt sich. daß dieses Ankerblech 12 im Querschnitt gesehen kreisförmig gestaltet ist. wobei jedoch die Umfangsfläche eines Kreises in bekannter Weise regelmäßig unterbrochen ist. um Ankernuten 20 zu bilden. Die Ankernuten 20 und die damit zusammenwirkenden Wandungen des Ankerblechs 12 können eine an sich bekannte Ausbildung haben. Im gewählten Aus führungsbeispiel hat jeder zwischen zwei Ankernuten 20 liegende Wandungsteil die Form eines T's mit einer gekrümmten Außenfläche.

Jedes Ankerblech 12 hat einen mittleren Durchbruch 21, dessen genaue Ausbildung am besten aus der Fig. 5 der Zeichnung ersichtlich ist. Daraus ergibt sich. daß in den Begrenzungsrändern 22 des Durchbruches 21 Aussparungen 23 gebildet sind. Im gewählten Ausführungsbeispiel sind jedem Durchbruch 21 insgesamt vier Aussparung 23 zugeordnet. die untereinander gleichgestaltet sind und die im Begrenzungsrand 22 verteilt liegen. Jede der Aussparungen 23 hat einen steilen Bereich 24. der der Führung beim Einschieben der Motorwelle dient sowie einen fast geradlinig verlaufenden Befestigungsbereich 25. der dazu dient. mit der Spitze 18 der Vorsprünge 16 jeweils zusammenzuwirken. um die gewollte feste Verbindung zwischen Motorwelle 14 und Ankerpaket 11 zu erzielen.

Beim erfindungsgemäßen Verfahren zum Herstellen von Ankern für Elektromotore wird wie folgt vorgegangen:

Zunächst werden auf der Umfangsfläche 17 der Motorwelle 14 die Vorsprünge 16 angebracht. beispielsweise in der aus der Fig. 2 ersichtlichen Anzahl und Anordnung. Jedes Ankerblech 12 erhält einen mittleren Durchbruch 21. in dessen Begrenzungsrand 22 die Aussparungen 23 angeordnet sind. Die Abmessungen des Durchbruches 21 und die der Aussparungen 23 der Begrenzungsränder 22 haben Übermaß im Bezug auf die entsprechenden Teile der Motorwelle Aus den Ankerblechen 12 wird dann ein Ankerpaket 11 gebildet. Zu diesem Zweck können bekannte Verbindungsmittel und Verbindungsverfahren eingesetzt werden. Im Anschluß daran wird die Motorwelle 14 in das Ankerpaket 11 eingeschoben und dort positioniert. Danach wird zur Herstellung einer Verbindung zwischen der Motorwelle 14 und dem Ankerpaket 11 eine relative Winkelbewegung der beiden Teile zueinander durchgeführt. Bevorzugt wird dabei eine Winkelbewegung von 20° genommen. Durch diese Drehung wird erreicht. daß das erste und letzte Ankerblech 12 des Ankerpakets 11 gleichen Materialanteil zum Verdrängen vorfinden. Dadurch werden alle Ankerbleche und auch der Isolierstern gleich gut befestigt. Durch das erfindungsgemäße einfache Einschieben der Motorwelle in das Ankerpaket bleiben die Lagerstellen der Ankerbleche unbeschädigt. Dies macht sich dadurch vorteilhaft bemerkbar, daß Lagerfresser nicht auftreten. Das erfindungsgemäße Verfahren zum Herstellen von Ankern für Elektromotore läßt sich insbesondere dann insbesondere sehr gut einsetzen, wenn es um eine automatische Fertigung von Ankern geht.

Wie bereits erwähnt, ist die dargestellte Ausführung nur eine beispielsweise Verwirklichung der Erfindung und diese nicht darauf beschränkt. Vielmehr sind noch mancherlei andere Ausführungen und Anwendungen möglich. Dies gilt insbesondere für die Anzahl und die Ausbildung der Vorsprünge 16, die der Umfangsfläche 17 der Motorwelle zugeordnet sind. Die Querschnittsgestaltung dieser Vorsprünge kann abweichend von dem dargestellten Ausführungsbeispiel gewählt werden. Zwar ist der einstückigen Ausbildung zwischen den Vorsprüngen 16 und der Motorwelle 14 der Vorzug zu geben, jedoch ist es auch grundsätzlich möglich, die Vorsprünge für sich zu fertigen, um sie danach mit der Umfangsfläche der Motorwelle 14 zu verbinden. Auch können die Ankerbleche, aus denen das Ankerpaket zusammengesetzt wird, eine andere als die dargestellte Ausbildung erhalten. Die Motorwelle 14 kann eine andere als die in Fig. 2 dargestellte Ausführungsform erhalten.

10 - Anker
11 - Ankerpaket
12 - Ankerblech
13 - Verbindungsmittel
14 - Motorwelle
15 - Längsmittellinie (von 14)
16 - Vorsprung (an 14)
17 - Umfangsfläche (von 14)
18 - Spitze (von 16)
19 - Kerbe (in 14)
20 - Ankernuten
21 - Durchbruch (in 12)
22 - Begrenzungsrand (von 21)
23 - Aussparung
24 - steiler Bereich (von 23)
25 - Befestigungsbereich (von 23)

## Ansprüche

1. Verfahren zum Herstellung von Ankern für Elektromotore, bei der die Motorwelle auf ihrer Umfangsfläche im mittleren Bereich mit wenigstens einem in Längsrichtung verlaufenden Vorsprung und anschließend mit einem Ankerpaket versehen wird, welches aus einer Vielzahl von nebeneinander angeordneten Ankerblechen mit jeweils einem mittleren Durchbruch besteht,
**dadurch gekennzeichnet,**
daß jedes Ankerblech (12) einen Durchbruch (21) erhält, der im Bereich seines Lagerrandes (22) mit einer dem Vorsprung (16) angepaßten Aussparung (23) versehen wird und danach die Ankerbleche (12) zu einem Ankerpaket (11) zusammengesetzt werden, worauf die Motorwelle (14) in das Ankerpaket eingeschoben und positioniert wird und danach zur Herstellung einer Verbindung zwischen Motorwelle (14) und Ankerpaket (11) eine relative Winkelbewegung der beiden Teile zueinander erfolgt.

2. Verfahren zum Herstellen von Ankern für Elektromotore nach Anspruch 1, dadurch gekennzeichnet, daß die Winkelbewegung zwischen Motorwelle (14) und Ankerpaket (11) etwa 20° beträgt.

3. Nach dem Verfahren gemäß Anspruch 1 hergestellter Anker für Elektromotore, dadurch gekennzeichnet, daß jedes Ankerblech (12) des Ankerpaketes (11) einen mittleren Durchbruch (21) aufweist, dessen Begrenzungsrand (22) wenigstens eine Aussparung (23) hat und daß die Abmessungen dieses Durchbruches (21) etwas größer gehalten sind als der Durchmesser der mit wenigstens einem Vorsprung (16) versehenen Motorwelle (14).

4. Anker für Elektromotore nach Anspruch 3, dadurch gekennzeichnet, daß die Motorwelle (14) neben dem Vorsprung (16) liegend und parallel dazu verlaufend eine Kerbe (19) aufweist.

5. Anker für Elektromotore nach Anspruch 3 und 4, dadurch gekennzeichnet, daß der Vorsprung (16) der Motorwelle (14) im Querschnitt gesehen etwa als spitzwinkeliges Dreieck gestaltet ist und daß die Spitze (18) dieses Dreiecks nach außen zeigt.

6. Anker für Elektromotore nach einem oder mehreren der vorangehenden Ansprüche 3 bis 4, dadurch gekennzeichnet, daß die Aussparung (23) in dem Begrenzungsrand (22) des Durchbruches (21) des Ankerbleches (12) einen steilen Führungsbereich (24) und einen etwa geradlinig verlaufenden Befestigungsbereich (25) aufweist.

7. Anker für Elektromotore nach einem oder mehreren der Ansprüche 3 bis 6, gekennzeichnet durch die Anordnung von vier untereinander gleichgestalteten und über die Umfangsfläche (17) der Motorwelle (14) verteilt angeordneten Vorsprüngen (16), denen eine entsprechende Anzahl von angepaßten Aussparungen (23) der Begrenzungsränder (22) der Durchbrüche (21) der Ankerbleche (12) zugeordnet ist.

8. Anker für Elektromotore nach einem oder mehreren der vorangehenden Ansprüche 3 bis 7, dadurch gekennzeichnet, daß die Vorsprünge (16) mit der Motorwelle (14) einstückig ausgebildet sind.

9. Anker für Elektromotore nach einem der Ansprüche 3 bis 7, gekennzeichnet durch Vorsprünge (16),die in einem zusätzlichen Verfahren auf die Umfangsfläche 17 der Motorwelle (14) aufgebracht sind.

*FIG.1*

*FIG. 2*

*FIG. 3*

*FIG. 4*

*FIG.5*

Fa. Robert Krups Stiftung & Co. KG

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-2 067 850 (HITACHI)<br>* Anspruch 1; Figuren 2, 3 *<br>--- | 1,4,5 | H 02 K 1/28<br>H 02 K 15/02 |
| A | DE-A-3 435 508 (SIEMENS)<br>* Seite 5, Zeilen 18-23; Figur 1 *<br>--- | 1 | |
| A,D | DD-A- 117 304 (DONATH et al.)<br>* Ansprüche 1, 2; Figuren 1, 3 *<br>--- | 1,4 | |
| A,D | DE-A-2 062 419 (BOSCH)<br>* Figur 2 *<br>----- | 1 | |

**RECHERCHIERTE SACHGEBIETE (Int. Cl.4)**

H 02 K 1/00
H 02 K 5/00
H 02 K 7/00
H 02 K 15/00
F 16 D 1/00

Der vorliegende Recherchenbericht wurde für alle Patentansprüche erstellt

| Recherchenort | Abschlußdatum der Recherche | Prüfer |
|---|---|---|
| BERLIN | 15-03-1988 | LEOUFFRE M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsatze
E : alteres Patentdokument. das jedoch erst am oder nach dem Anmeldedatum veröffentlicht worden ist
D : in der Anmeldung angeführtes Dokument
L : aus andern Grunden angeführtes Dokument
................................................................
& : Mitglied der gleichen Patentfamilie, übereinstimmendes Dokument

EPO FORM 1503 03.82 (P0403)